# EUROPÄISCHE PATENTANMELDUNG

(11) **EP 2 392 941 A2**
(43) Veröffentlichungstag der Anmeldung: **07.12.2011**
(21) Anmeldenummer: 11159060.0
(22) Anmeldetag: 21.03.2011
(51) Int. Cl.: G01S 7/497, G01S 17/02, G01S 17/87, G01V 8/14

(54) **Lichttaster in V-Anordnung**

(30) Priorität: 27.05.2010 DE 102010021807
(71) Anmelder: SICK AG, 79183 Waldkirch (DE)
(72) Erfinder: Bergbach, Roland, 79341, Kenzingen (DE)
(74) Vertreter: Hehl, Ulrich

(57) **Zusammenfassung**

Es wird ein Lichttaster (10) in V-Anordnung zur Erkennung von Objekten (12) in einem Nachweisabstand mit einem ersten Lichtsender (22a) und einem zugehörigen ersten Lichtempfänger (34b), die derart zueinander angeordnet sind, dass ihre optischen Achsen (18a-b) V-förmig in einem V-Winkel (20) zueinander stehen und sich in dem Nachweisabstand schneiden, mit einer ersten Auswertungseinheit (36b), in der ein Ausgangssignal des ersten Lichtempfängers (34b) bewertbar ist, um über die Anwesenheit eines Objekts (12) in dem Nachweisabstand zu entscheiden, sowie mit einem zweiten Lichtsender (22b) angegeben. Dabei fällt die optische Achse (18b) des zweiten Lichtsenders (22b) mit derjenigen des ersten Lichtempfängers (34b) zusammen, so dass Sendelichtflecken des ersten Lichtsenders (22a) und des zweiten Lichtsenders (22b) in dem Nachweisabstand zur Deckung kommen.

## Beschreibung

Die Erfindung betrifft einen Lichttaster in V-Anordnung sowie ein tastendes Verfahren zur Erkennung von Objekten in einem Nachweisabstand nach dem Oberbegriff von Anspruch 1 beziehungsweise 12.

Eine häufige Anwendung für einen optischen Sensor ist, die Anwesenheit eines Objekts zu erkennen. Dafür sind Einweglichtschranken bekannt, in denen ein Lichtsender einen Sendestrahl auf einen gegenüberliegenden Lichtempfänger sendet, so dass durch Lichtunterbrechung ein Objekt im Strahlengang erkannt wird. In einer Variante als Reflexionslichtschranke sind Lichtsender und Lichtempfänger am selben Ort angebracht, und der Strahl wird durch einen Reflektor zurückgeworfen.

Eine weitere bekannte Familie von optoelektronischen Sensoren bilden Lichttaster, bei denen ähnlich einer Reflexionslichtschranke Lichtsender und Lichtempfänger in einem Gehäuse untergebracht sind. Allerdings wird hier der Sendestrahl frei in den Raum gerichtet und von einem Objekt remittiertes oder reflektiertes Licht im Lichtsender detektiert. Hier ist also ein Objekt im Strahlengang das detektierte Ereignis, welches zu Lichtempfang führt, während bei einer Lichtschranke umgekehrt im objektfreien Zustand der Strahl empfangen und durch das Objekt der Lichtempfang unterbrochen wird. Lichttaster werden wie Lichtschranken oft als Schalter eingesetzt, mit dem einen Schaltzustand bei Objektdetektion und dem anderen Schaltzustand bei Abwesenheit eines Objekts.

Einfache Lichttaster senden und empfangen Licht auf demselben Pfad. In einer Erweiterung werden Lichtsender und Lichtempfänger in einem Winkel zueinander verkippt. Der Lichtsender sendet den Lichtstrahl in einem Winkel auf die Objektoberfläche. Dort wird der Sendestrahl V-förmig reflektiert oder diffus aufgestreut und trifft auf den gegenüberliegenden Lichtempfänger. Nachteilig an dieser Lösung ist, dass Arbeitsabstand, Verkippungswinkel von Lichtsender und Lichtempfänger und eine gleich bleibende Objektwinkellage aufeinander abgestimmt sein müssen, weil sonst der Sendestrahl den Lichtempfänger verfehlt. Der V-Lichttaster muss deshalb für einen gewählten Nachweisabstand ausgerichtet sein.

Die zu detektierenden Objekte haben sehr unterschiedliche Eigenschaften. Neben der Kontur der zu dem Sensor gerichteten Oberfläche spielt dabei vor allem das Glanzverhalten eine Rolle, das sich am Verhältnis von Reflexion zu Remission festmachen lässt. Dabei reicht das Eigenschaftsspektrum von hochglänzenden Objekten wie Silizium-Wafern mit einer Reflexion von ca. 95 % und einer Remission von ca. 5 % bis hin zu matten Objekten, bei denen sich dieses Verhältnis umkehrt. Auch Zwischenformen, beispielsweise Kaffeeverpackungen mit Glanzfolienanteilen und streuenden Aufdrucken sollen erkannt werden, bei denen Reflexion und Remission sich in etwa die Waage halten.

Einfache Lichttaster arbeiten energetisch, vergleichen also die empfangene Lichtintensität mit einer Schaltschwelle. Dabei ergibt sich das Problem, dass das reflektierte oder remittierte Sendelicht nicht nur von dem zu detektierenden Objekt, sondern auch von einer dahinterliegenden Hintergrundebene empfangen wird. Dann können Situationen auftreten, beispielsweise bei einer unebenen Kaffeeverpackung vor einem hellen Hintergrund, in denen sich keine stabile Schaltschwelle angeben lässt, weil die Intensität bei Anwesenheit der Kaffeeverpackung gar nicht zuverlässig von derjenigen des Hintergrundes abweicht. Folglich ist der einfache Lichttaster für diese Anwendung nicht einsetzbar. Noch deutlicher wird das Problem im Falle eines transparenten Objekts. Der geringe Lichtanteil, den dieses Objekt zurückwirft, kann von dem Hintergrund nicht unterschieden werden.

Aus der DE 196 14 872 C1 ist ein Lichttaster mit zwei Sendern und zwei Empfängern bekannt, die jeweils einen Lichtpfad in der gleichen Richtung, aber unterschiedlicher Polarisation aufspannen. Dabei wird ein sehr flacher V-Winkel vorgegeben, um Totalreflexion an dem zu detektierenden Objekt zu erreichen, denn andernfalls würde die Polarisation beeinflusst oder zerstört. Damit ist der Lichttaster nur für sehr nahe Objekte geeignet, oder er nimmt wegen des großen V-Winkels sehr viel Raum ein. Die erforderliche Ausrichtung des herkömmlichen Lichttasters wird dabei einfach vorausgesetzt. Eine Änderung des Arbeitsabstands ist nicht vorgesehen.

Es ist daher Aufgabe der Erfindung, einen Sensor zur Objektdetektion anzugeben, der mit einer großen Vielfalt von Objekten umgehen kann und flexibel anpassbar ist.

Diese Aufgabe wird durch einen Lichtaster in V-Anordnung gemäß Anspruch 1 und ein tastendes Verfahren zur Erkennung von Objekten in einem Nachweisabstand gemäß Anspruch 12 gelöst. Dabei geht die Erfindung von dem Grundgedanken aus, den Remissionsanteil glänzender Objekte zu erkennen. Dies erfolgt in einer V-Anordnung. Um die Anpassbarkeit und Detektionssicherheit gegenüber herkömmlichen V-Tastern zu erhöhen, wird ein zusätzlicher Sender eingesetzt, welcher den V-förmigen Lichtpfad in umgekehrter Richtung ausstrahlt. Dessen optische Achse fällt also mit derjenigen des ersten Lichtempfängers zusammen. Dabei ist ein kleiner Parallelversatz, wie er beispielsweise durch eine Doppelaugenkonstruktion der Optik von Lichtsender und Empfänger entsteht, und auch ein herstellungsbedingter Toleranzwinkel erlaubt. Die Lichtflecken kommen dadurch zur Deckung, wobei auch hier nur eine Überlappung und keine exakte Übereinstimmung gefordert wird.

Die Erfindung hat den Vorteil, dass eine große Anzahl von stark bis schwach glänzenden, unebenen und ungleichmäßigen Objekten erkannt wird. Ein Beispiel hierfür sind Kaffeeverpackungen. Neben schwierig zu erkennenden Objekten werden auch gewöhnliche Objekte sicher erfasst, so dass der Lichttaster universell einsetzbar ist. Durch den V-Winkel wird außerdem der Lichtfleck auf dem Objekt gegenüber senkrechtem Auftreffen verbreitert. Daraus ergibt sich ein größerer Fangwinkel des Lichtempfängers für die Reflexionen der Glanzanteile.

Der Lichttaster weist bevorzugt einen dem zweiten Lichtsender zugehörigen zweiten Lichtempfänger auf, dessen optische Achse mit derjenigen des ersten Lichtsenders zusammenfällt. Damit wird der entgegengesetzte Lichtpfad des zweiten Lichtsenders zu einem zweiten, verschränkten Lichttaster in V-Anordnung vervollständigt. Konstruktiv kann dies beispielsweise erreicht werden, indem zwei gewöhnliche Reflexionslichtschranken v-förmig zueinander ausgerichtet und die jeweiligen Sender über Kreuz angeschlossen werden.

In bevorzugter Weiterbildung ist eine zweite Auswertungseinheit vorgesehen, in der ein Ausgangssignal des zweiten Lichtempfängers bewertbar ist, um über die Anwesenheit eines Objekts in dem Nachweisabstand zu entscheiden. Somit findet auch auf dem zweiten v-förmigen Lichtpfad eine Auswertung statt, um Objekte noch sicherer zu detektieren.

Die erste Auswertungseinheit und/oder die zweite Auswertungseinheit ist bevorzugt dafür ausgebildet, das Ausgangssignal mit einer Schaltschwelle zu vergleichen, wobei ein erster Schaltausgang und/oder ein zweiter Schaltausgang vorgesehen ist, an dem ein binäres Objektanwesenheitssignal ausgebbar ist. Dies entspricht der häufigsten Anwendung des Lichttasters als Schalter, der jeweils bei Eintritt oder Austritt eines Objekts in den Detektionsbereich schaltet.

Die erste Auswertungseinheit und/oder die zweite Auswertungseinheit ist bevorzugt dafür ausgebildet, aus der Lage eines Empfangslichtflecks auf dem ersten Lichtempfänger und/oder dem zweiten Lichtempfänger den Abstand eines Objekts zu triangulieren. Dazu muss der verwendete Lichtempfänger ortsauflösend sein. Zumindest in einem Abstandsintervall um den Nachweisabstand wird dadurch eine Entfernungsinformation verfügbar, die beispielsweise Rückschlüsse auf die Kontur und damit auch eine Klassifikation des Objekts zulässt. Besonders interessant ist eine Kombination eines energetischen Tasters mit einem Triangulationstaster, also einer Schaltschwellenauswertung der empfangenen Intensität zur Anwesenheitsfeststellung und eine Triangulation zur Entfernungsbestimmung. Alternativ zu dieser Ausführungsform sind aber einfache Lichtempfänger ohne Ortsauflösung vorgesehen, die nur eine energetische und keine triangulierende Messung erlauben.

Vorteilhafterweise ist eine übergeordnete Auswertungseinheit vorgesehen, welche mit den Lichtempfängern, den Lichtsendern und/oder den Schaltausgängen verbunden ist. Diese übergeordnete Auswertungseinheit ist dann in der Lage, den gesamten Lichttaster zu steuern und beispielsweise zwischen dem ersten Lichtsender und dem zweiten Lichtsender umzuschalten oder die Schaltschwellen einzustellen. Außerdem können die Messinformationen aus beiden v-förmigen Messpfaden gemeinsam ausgewertet werden. Das kann sowohl auf Ebene der Rohdaten als auch durch logische Verknüpfung der einzelnen Schaltausgänge realisiert werden.

Die verschiedenen genannten Auswertungseinheiten, also eine erste Auswertungseinheit für den v-förmigen Messpfad zwischen erstem Lichtsender und erstem Lichtempfänger, eine zweite Auswertungseinheit für den v-förmigen Messpfad zwischen zweitem Lichtsender und zweitem Lichtempfänger sowie die übergeordnete Auswertungseinheit, ist dabei nur als funktional getrennt zu verstehen. In der technischen Realisierung können einige der Funktionen oder alle Funktionen zusammengefasst sein, etwa auf einem Mikrocontroller, einem FPGA (Field Programmable Gate Array), einem ASIC (Application Specific Integrated Circuit), einem DSP (Digital Signal Processor) oder einem ähnlichen Logikbaustein.

Der erste Lichtsender und/oder der zweite Lichtsender weist bevorzugt eine hohe optische Ausgangsleistung von zumindest einigen Watt, insbesondere mehr als zehn Watt auf. Durch die v-förmige Anordnung führt die hohe Sendeleistung nicht zu störenden Hintergrundsignalen. Bevorzugt verwendet die erste Auswertungseinheit und/oder die zweite Auswertungseinheit eine sehr niedrige Schaltschwelle von weniger als 1 %, insbesondere weniger als 0,1 % der optischen Ausgangsleistung. Damit entsteht eine sehr hohe Nachweisempfindlichkeit. Besondere Beispielanwendungen hierfür sind transparente Objekte, etwa eine Risskontrolle transparenter Folien oder eine Glasflaschenerkennung.

Das Pulsverhalten des ersten Lichtsenders und/oder des zweiten Lichtsenders ist bevorzugt veränderbar. Dabei wird von dem üblichen Betrieb mit kurzen Pulsen auf längere Pulse bis hin zu einem Dauerstrichbetrieb gewechselt, um die Sendelichtflecken gut sichtbar zu machen. Da dies hauptsächlich während der kurzen Einrichtungsphase genutzt wird, kann eine Beeinträchtigung der Lebensdauer der Lichtsender durch die höhere Belastung hingenommen werden.

Der erste Lichtsender und/oder der zweite Lichtsender weisen in einer bevorzugten Ausführungsform eine divergente Abstrahlcharakteristik auf. Zusätzlich zu der Verbreiterung des Lichtflecks auf dem Objekt durch das schräge Auftreffen aufgrund der v-förmigen Anordnung wird so ein besonders breiter Lichtfleck erzeugt. Damit erreicht zumindest ein Anteil der Reflexion den Lichtempfänger, so dass eine Glanzerkennung ermöglicht wird.

Die Empfangskeule des ersten Lichtempfängers und/oder des zweiten Lichtempfängers ist vorzugsweise größer als die Sendekeule des ersten Lichtempfängers und/oder des zweiten Lichtempfängers. Damit erhöht sich die Ausrichttoleranz und die Detektionstiefe, also der Bereich um den Nachweisabstand, in dem Objekte erfassbar sind.

In bevorzugter Weiterbildung ist ein Justagehalter vorgesehen, mittels dessen der V-Winkel verstellbar ist. Dadurch ist eine Einstellung des Lichttasters auf einen gewünschten Nachweisabstand möglich. Die richtige Justage wird durch die Überlappung der Sendelichtflecken überwacht. Der Winkelbereich, innerhalb dessen der V-Winkel verstellbar ist, liegt bevorzugt in einem Bereich kleiner 90°. Spitze Winkel führen dazu, dass ein größerer Anteil des Remissionslichts empfangen wird. Außerdem bleibt die Baugröße des Lichttasters überschaubar. Der verstellbare Winkelbereich wird aus diesen Gründen noch bevorzugter auch weiter eingeschränkt, beispielsweise auf 10°-60° oder sogar nur 20°-40°. Zu spitze Winkel sollten vermieden werden, weil sonst die Vorteile der V-Anordnung verloren gehen.

Bevorzugt ist ein Justagehalter vorgesehen, mittels dessen die Mittelachse des V-Winkels verstellbar ist. Dies ist derselbe Justagehalter, mit dem der V-Winkel eingestellt wird, oder ein zusätzlicher Justagehalter. Der Justagehalter kann mit einem Gehäuse des Lichttasters verbunden oder Teil dieses Gehäuses sein, so dass das Gehäuse die Referenz für die Verstellbarkeit bildet. Durch Verstellen der Mittelachse steht die V-Anordnung insgesamt in einem Winkel zu einer Normalenebene in dem Nachweisabstand. Damit ist die Messung aus zwei unterschiedlichen Auftreffwinkeln möglich. Diese beiden Messungen können beispielsweise verglichen werden, wobei sich beispielsweise eine besonders große Abweichung bei glänzenden Objekten zeigt. So wird eine Unterscheidung glänzender von matten Objekten ermöglicht. In einer anderen Konstellation steht ein Lichtsender senkrecht zu dem Objekt und erkennt so auf herkömmliche Weise das Objekt, während der schräg stehende andere Lichtsender dazu dient, eine dem Objekt vorgeordnete Folie zu erfassen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Draufsicht auf einen Lichttaster in v-förmiger Anordnung gemäß einer ersten Ausführungsform der Erfindung;
- Fig. 2: eine Draufsicht auf eine weitere Ausführungsform der Erfindung mit über-geordneter Auswertungseinheit;
- Fig. 3a: eine vereinfachte Darstellung des Lichttasters gemäß Figur 1 in einem ersten V-Winkel,
- Fig. 3b: eine Darstellung gemäß Figur 3a mit verstelltem V-Winkel;
- Fig. 4a: eine vereinfachte Darstellung des Lichttasters gemäß Figur 1 mit einer symmetrisch zu der Detektionsebene angeordneten Mittelachse; und
- Fig. 4b: eine Darstellung gemäß Figur 4a mit einer verstellten Mittelachse.

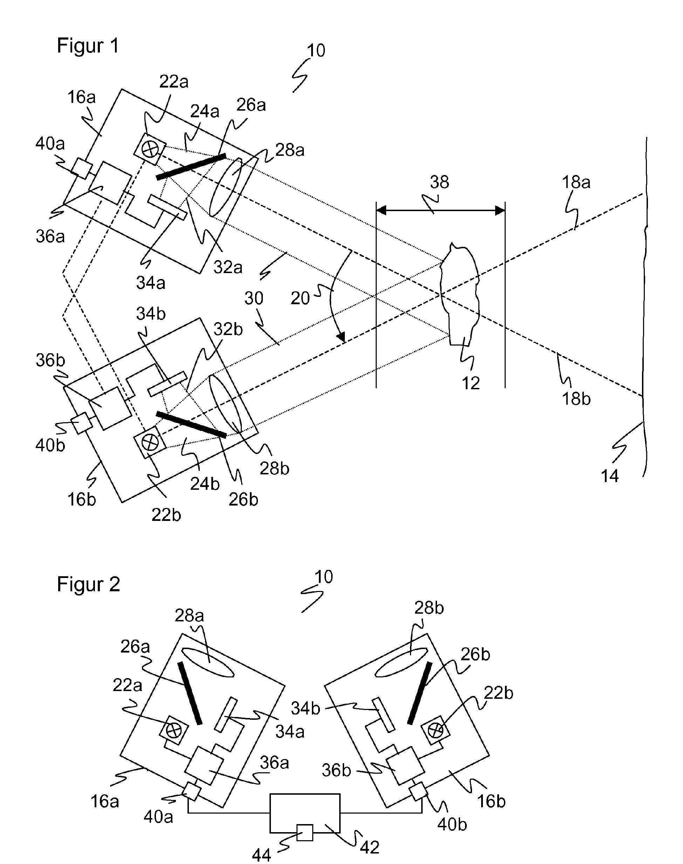

Figur 1 zeigt in der Draufsicht einen Lichttaster 10 in V-Anordnung zum Nachweis eines Objekts 12 vor einem Hintergrund 14. Der Lichttaster 10 weist zwei verschränkte Sensoreinheiten 16a-b auf, deren optische Achsen 18a-b um einen V-Winkel 20 gegeneinander verkippt sind. Jede Sensoreinheit 16a-b ist prinzipiell wie eine Reflexionslichtschranke aufgebaut. Ein Lichtsender 22a-b transmittiert Sendelicht 24a-b durch einen Teilerspiegel 26a-b, welches mittels einer Sensoroptik 28a-b strahlgeformt wird und auf einem V-förmigen Lichtpfad 30 in der gegenüberliegenden Sensoreinheit 16b-a nach Passieren der Sensoroptik 28b-a und Reflexion an dem Teilerspiegel 26b-a als Empfangslicht 32a-b in einem Lichtempfänger 34b-a registriert wird. Bei dem Lichtsender 22a-b handelt es sich beispielsweise um eine Halbleiterlichtquelle, wie eine LED oder eine Laserdiode. Der Lichtempfänger 34a-b ist beispielsweise als einfache Photodiode bis hin zu einer ortsauflösenden CCD- oder CMOS-Matrix beziehungsweise -Zeile ausgebildet.

Jeweils eine Auswertungseinheit 36a-b ist mit dem Lichtempfänger 34a-b verbunden und vergleicht die empfangene Lichtintensität mit einer Schaltschwelle. Die daraus resultierende Entscheidung, ob ein Objekt 12 innerhalb der Detektionstiefe 38 vorhanden ist, wird als binäres Schaltsignal auf einen Schaltausgang 40a-b gelegt. In einer typischen Anwendung ist der Lichttaster 10 an einem Förderer montiert, wo Objekte 12 vorbeibewegt werden und jeweils bei Eintritt oder Austritt des Objekts 12 ein Schaltsignal erzeugt wird.

Die Verschränkung der Sensoreinheiten 16a-b entsteht durch eine gekreuzte Verdrahtung der Lichtsender 22a-b, die jeweils mit der gegenüberliegenden Auswertungseinheit 36b-a statt mit der eigenen Auswertungseinheit 36a-b verbunden sind, wie in Figur 1 durch strichpunktierte Linien illustriert.

Jede Sensoreinheit 16a-b für sich und/oder der Lichttaster 10 als Ganzes ist von einem Gehäuse umgeben. Die korrekte Ausrichtung des Lichttasters 10 auf einen gewünschten Nachweisabstand zu überprüfen, sollten die Lichtflecken der Lichtsender 22a-b auf einem Testobjekt 12 innerhalb der Detektionstiefe 38 überlappen. Damit die Lichtflecken besser erkannt werden, ist ein Justagemodus vorgesehen, in dem die Lichtsender längere Pulse oder sogar ein dauerhaftes Sendelicht 24a-b aussenden.

Aufgrund der verschränkten Anordnung der beiden Sensoreinheiten 16a-b spielt die Farbe und Beschaffenheit des Hintergrundes 14 für die Erkennungsleistung des Lichttasters 10 keine Rolle. Dies gilt sogar im Falle wechselnder Hintergrundbedingungen oder von Reflektoren als Hintergrund 14. Beide Sensoreinheiten 16a-b empfangen kein Signal von dem Hintergrund, weil der Sendelichtfleck der verschränkten, gegenüberliegenden Sensoreinheit 16a-b auf dem Hintergrund 14 außerhalb des Empfangsbereichs liegt. Die jeweilige Empfangskeule der Lichtempfänger 34b-a blickt auf einen unbeleuchteten Bereich des Hintergrunds 14.

Gegenüber dem somit prinzipiell verschwindenden Hintergrundsignal kann ein sehr leistungsstarker Lichtsender 22a-b und eine sehr niedrige Schaltschwelle gewählt werden. Auch ein Übersprechen innerhalb des Lichttasters 10 ist ausgeschlossen. Solange innerhalb der Detektionstiefe 38 durch ein Objekt 12 auch nur eine minimale Restremission auf einer glänzenden oder transparenten Oberfläche verursacht wird, kann der Lichttaster 12 demnach zuverlässig schalten. Die einzige Grenze setzt die verfügbare Sendeleistung, die entsprechend für die gewünschte Anwendung optimiert werden kann.

Zur vereinfachten Darstellung werden in der Figur 1 identische Sendekeulen und Empfangskeulen auf dem Lichtpfad 30 gezeigt. Abweichend davon kann die Empfangskeule größer gewählt werden als die Sendekeule, um Toleranzen der Ausrichtung auszugleichen. Außerdem wird dadurch die Detektionstiefe 38 erhöht und die Signalstärke innerhalb der Detektionstiefe 38 homogenisiert.

In einer vereinfachten Ausführungsform wird auf eine der beiden Sensoreinheiten 16b verzichtet und stattdessen lediglich ein einzelner Lichtsender 22b extern an die verbleibende Sensoreinheit 16a angeschlossen, um den v-förmigen Lichtpfad 30 zu vervollständigen. Dabei entsteht eine zusätzliche Variabilität, denn der externe Lichtsender 22b kann speziell an die Anwendungsbedingungen angepasst werden. Denkbar sind leistungsstarke Laserpointermodule oder Lichtsender 22b mit verstellbarem Fokus oder festen Fokusklassen. Der interne Lichtsender 22a wird in dieser Ausführungsform nur während der Justage zugeschaltet, um den Lichtempfänger 34a auszurichten. Dazu sollten Sendekeule des internen Lichtsenders 22a und Empfangskeule des Lichtempfängers 34a möglichst gut übereinstimmen. Im Betrieb ist der interne Lichtsender 22a dann deaktiviert.

Figur 2 zeigt eine weitere Ausführungsform eines erfindungsgemäßen Lichttasters 10 in V-Anordnung. Dabei bezeichnen hier und im Folgenden gleiche Bezugszeichen die gleichen oder einander entsprechende Merkmale. Im Unterschied zu der Ausführungsform gemäß Figur 1 werden die Lichtsender 22a-b nicht überkreuz, sondern innerhalb der jeweiligen Sensoreinheit 16a-b an die Auswertungseinheiten 36a-b angeschlossen. Dieser schaltungstechnische Unterschied ist aber funktional nicht vorhanden, denn eine gemeinsame Auswertungseinheit 42 ist mit den Auswertungseinheiten 36a-b verbunden. Auf diesem Wege werden die Lichtsender 22a-b weiterhin überkreuz zugeordnet und angesteuert.

Die gemeinsame Auswertungseinheit 42 empfängt über die Auswertungseinheiten 36ab die Empfangssignale sowie durch einen Anschluss an die Schaltausgänge 40a-b auch die jeweiligen Schaltsignale. Dadurch sind diverse übergreifende Funktionen realisierbar, etwa die gezielte Ansteuerung und Umschaltung der Lichtsender 22a-b, eine gezielte Schaltschwellenumschaltung, eine gemeinsame Verrechnung der Empfangssignale beider Sensoreinheiten 16a-b oder eine logische Verknüpfung der Schaltsignale an den Schaltausgängen 40a-b. Dazu können die einzelnen Messungen beider Sensoreinheiten 16a-b beispielsweise auch unterschiedlich gewichtet werden, oder es werden unterschiedliche Schaltschwellen gesetzt. Im Ergebnis liefert die gemeinsame Auswertungseinheit 42 ein binäres Objektfeststellungssignal, welches an einem Schaltausgang 44 bereitgestellt wird.

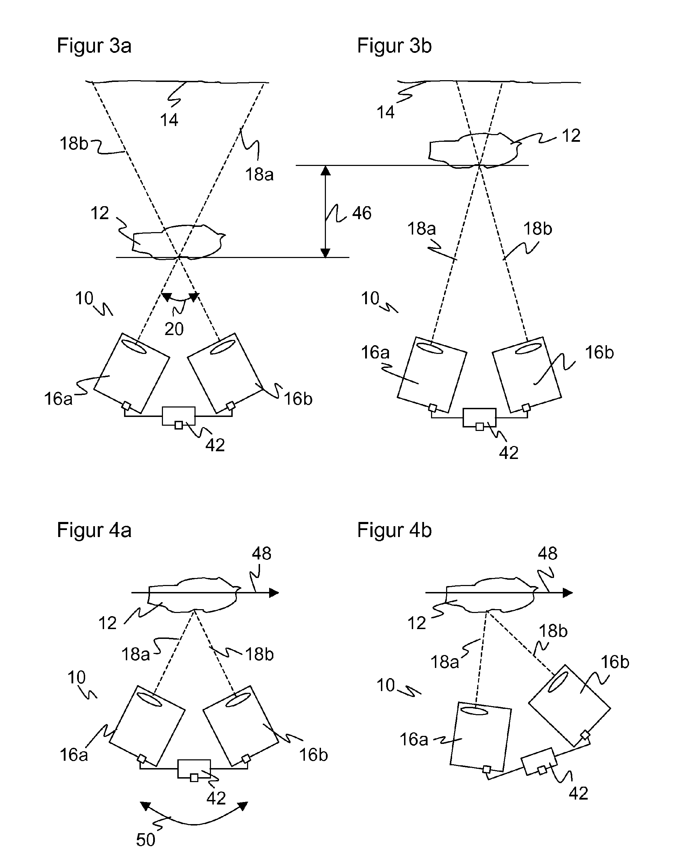

Figur 3 erläutert eine Verstellung des V-Winkels zu Einstellung eines anderen Nachweisabstands. Dabei zeigt Figur 3a einen größeren V-Winkel 20, der in Figur 3b verkleinert wird. Dazu wird beispielsweise eine nicht gezeigte Justierhalterung verwendet. Wie durch einen Pfeil 46 illustriert, verlagert sich durch diese Änderung des V-Winkels 20 der Nachweisabstand nach hinten. Der Arbeitsbereich des Lichttasters 10 ist jeweils durch Überlappung der Lichtflecken der Lichtsender 22a-b erkennbar. Bei der Verstellung des V-Winkels sollte darauf geachtet werden, dass ein hinreichender Abstand zu dem Hintergrund 14 eingehalten wird. Ansonsten ist nicht gewährleistet, dass der Hintergrund während des Betriebs von den Lichtsendern 22a-b unbeleuchtet bleibt.

Figur 4 erläutert eine weitere Verstellmöglichkeit, nämlich eine Verkippung der Mittelachse der V-Anordnung gegenüber einer durch einen Pfeil 48 illustrierten Bewegungsrichtung der Objekte 48. Diese Verkippung, wie durch einen Pfeil 50 angedeutet, führt zu einer nicht symmetrischen Anordnung. Die unterschiedlichen Auftreffwinkel des Sendelichts auf das Objekt 12 ergeben unterschiedliche Detektionsbedingungen für die beiden verschränkten Sensoreinheiten 16a-b. Diese Diversifizierung kann genutzt werden, um Objekte 12 noch zuverlässiger zu erkennen, oder um zusätzliche Messinformation zu gewinnen.

## Patentansprüche

1. Lichttaster (10) in V-Anordnung zur Erkennung von Objekten (12) in einem Nachweisabstand, mit einem ersten Lichtsender (22a) und einem zugehörigen ersten Lichtempfänger (34b), die derart zueinander angeordnet sind, dass ihre optischen Achsen (18a-b) V-förmig in einem V-Winkel (20) zueinander stehen und sich in dem Nachweisabstand schneiden, mit einer ersten Auswertungseinheit (36b), in der ein Ausgangssignal des ersten Lichtempfängers (34b) bewertbar ist, um über die Anwesenheit eines Objekts (12) in dem Nachweisabstand zu entscheiden, sowie mit einem zweiten Lichtsender (22b),
**dadurch gekennzeichnet,**
**dass** die optische Achse (18b) des zweiten Lichtsenders (22b) mit derjenigen des ersten Lichtempfängers (34b) zusammenfällt, so dass Sendelichtflecken des ersten Lichtsenders (22a) und des zweiten Lichtsenders (22b) in dem Nachweisabstand zur Deckung kommen.

2. Lichttaster (10) nach Anspruch 1,
der einen dem zweiten Lichtsender (22b) zugehörigen zweiten Lichtempfänger (34a) aufweist, dessen optische Achse (18a) mit derjenigen des ersten Lichtsenders (22a) zusammenfällt, so dass zwei verschränkte Lichttaster (16a-b) in V-Anordnung entstehen.

3. Lichttaster (10) nach Anspruch 2,
der eine zweite Auswertungseinheit (36a) aufweist, in der ein Ausgangssignal des zweiten Lichtempfängers (34a) bewertbar ist, um über die Anwesenheit eines Objekts (12) in dem Nachweisabstand zu entscheiden.

4. Lichttaster (10) nach einem der vorhergehenden Ansprüche,
wobei die erste Auswertungseinheit (36b) und/oder die zweite Auswertungseinheit (36a) dafür ausgebildet ist, das Ausgangssignal mit einer Schaltschwelle zu vergleichen, und wobei ein erster Schaltausgang (40b) und/oder ein zweiter Schaltausgang (40a) vorgesehen ist, an dem ein binäres Objektanwesenheitssignal ausgebbar ist.

5. Lichttaster (10) nach einem der vorhergehenden Ansprüche,
wobei die erste Auswertungseinheit (36b) und/oder die zweite Auswertungseinheit (36a) dafür ausgebildet ist, aus der Lage eines Empfangslichtflecks auf dem ersten Lichtempfänger (34b) und/oder dem zweiten Lichtempfänger (34a) den Abstand eines Objekts (12) zu triangulieren.

6. Lichttaster (10) nach einem der vorhergehenden Ansprüche,
wobei eine übergeordnete Auswertungseinheit (42) vorgesehen ist, welche mit den Lichtempfängern (34b-a), den Lichtsendern (22a-b) und/oder den Schaltausgängen (40b-a) verbunden ist.

7. Lichttaster (10) nach einem der vorhergehenden Ansprüche,
wobei der erste Lichtsender (22a) und/oder der zweite Lichtsender (22b) eine hohe optische Ausgangsleistung von zumindest einigen Watt, insbesondere mehr als zehn Watt aufweist, oder wobei die erste Auswertungseinheit (36b) und/oder die zweite Auswertungseinheit (36a) eine sehr niedrige Schaltschwelle von weniger als 1%, insbesondere weniger als 0,1% der optischen Ausgangsleistung verwendet.

8. Lichttaster (10) nach einem der vorhergehenden Ansprüche,
wobei das Pulsverhalten des ersten Lichtsenders (22a) und/oder des zweiten Lichtsenders (22b) veränderbar ist.

9. Lichttaster (10) nach einem der vorhergehenden Ansprüche,
wobei der erste Lichtsender (22a) und/oder der zweite Lichtsender (22b) eine divergente Abstrahlcharakteristik aufweisen.

10. Lichttaster (10) nach einem der vorhergehenden Ansprüche,
wobei die Empfangskeule des ersten Lichtempfängers (34b) und/oder des zweiten Lichtempfängers (34a) größer ist als die Sendekeule des ersten Lichtempfängers (22a) und/oder des zweiten Lichtempfängers (22b).

11. Lichttaster (10) nach einem der vorhergehenden Ansprüche,
wobei ein Justagehalter vorgesehen ist, mittels dessen der V-Winkel (20) verstellbar ist, insbesondere in einem Bereich kleiner 90° und/oder wobei ein Justagehalter vorgesehen ist, mittels dessen die Mittelachse des V-Winkels (20) verstellbar ist.

12. Tastendes Verfahren zur Erkennung von Objekten (12) in einem Nachweisabstand, bei dem in einer V-Anordnung mit einem ersten Lichtsender (22a) ein Lichtbündel (34a) ausgesandt und in einem zugehörigen ersten Lichtempfänger (34b), der mit seiner optischen Achse (18b) V-förmig in einem V-Winkel (20) zu der optischen Achse (18a) des ersten Lichtsenders (22a) steht, detektiert wird, sofern sich ein Objekt (12) in dem Nachweisabstand befindet, so dass anhand eines Empfangssignals des ersten Lichtempfängers (34b) über die Anwesenheit eines Objekts (12) in dem Nachweisabstand entschieden wird, wobei von einem zweiten Lichtsender (22b) ein weiteres Lichtbündel (24b) ausgesandt wird, **dadurch gekennzeichnet,**
**dass** die optische Achse (18b) des zweiten Lichtsenders (22b) mit derjenigen des ersten Lichtempfängers (34b) zusammenfällt und somit Sendelichtflecken des ersten Lichtsenders (22a) und des zweiten Lichtsenders (22b) in dem Nachweisabstand zur Deckung kommen.

13. Verfahren nach Anspruch 12,
wobei das weitere Lichtbündel (24b) in einem zweiten Lichtempfänger (34a) registriert wird, dessen optische Achse (18a) mit derjenigen des ersten Lichtsenders (22a) zusammenfällt, und wobei ein Empfangssignal des ersten Lichtempfängers (34b) und ein Empfangssignal des zweiten Lichtempfängers (34a) gemeinsam ausgewertet werden, um über die Anwesenheit eines Objekts (12) in dem Nachweisabstand zu entscheiden.

14. Verfahren nach Anspruch 12 oder 13,
wobei zur Einstellung des Nachweisabstands der V-Winkel (20) verändert wird, wobei die Justierung daran überprüft wird, ob die Lichtflecken des ersten Lichtsenders (22a) und des zweiten Lichtsenders (22b) in dem gewünschten Nachweisabstand zur Deckung kommen.

15. Verfahren nach einem der Ansprüche 12 bis 14,
wobei die Lichtsender (22a-b) und Lichtempfänger (34b-a) gemeinsam gegenüber einer Ebene im Nachweisabstand verkippt werden, so dass der erste Lichtsender (22a) in einem anderen Winkel auf Objekte (12) in dem Nachweisabstand strahlt als der zweite Lichtsender (22b).
